(19) Europäisches Patentamt
European Patent Office
Office européen des brevets

(11) **EP 3 209 474 B1**

(12) **EUROPÄISCHE PATENTSCHRIFT**

(45) Veröffentlichungstag und Bekanntmachung des Hinweises auf die Patenterteilung:
**18.07.2018 Patentblatt 2018/29**

(21) Anmeldenummer: **15813230.8**

(22) Anmeldetag: **23.10.2015**

(51) Int Cl.:
**B29C 39/14** *(2006.01)* **B29C 39/44** *(2006.01)*
**B29C 37/00** *(2006.01)* **B29C 41/28** *(2006.01)*

(86) Internationale Anmeldenummer:
**PCT/AT2015/050267**

(87) Internationale Veröffentlichungsnummer:
**WO 2016/061607 (28.04.2016 Gazette 2016/17)**

(54) **PROZESSOPTIMIERUNG FÜR EINE BANDGIESSANLAGE**

PROCESS OPTIMISATION FOR A STRIP CASTING SYSTEM

OPTIMISATION DE PROCESSUS POUR UNE INSTALLATION DE COULÉE DE BANDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.10.2014 AT 507652014**

(43) Veröffentlichungstag der Anmeldung:
**30.08.2017 Patentblatt 2017/35**

(73) Patentinhaber: **Berndorf Band GmbH**
**2560 Berndorf (AT)**

(72) Erfinder:
• **MORGENBESSER, Karl**
**A-2870 Aspang (AT)**
• **PROSCHEK, Michael**
**A-2525 Schönau (AT)**

(74) Vertreter: **Burger, Hannes**
**Anwälte Burger & Partner**
**Rechtsanwalt GmbH**
**Rosenauerweg 16**
**4580 Windischgarsten (AT)**

(56) Entgegenhaltungen:
DE-A1- 3 901 378    US-A1- 2002 007 927
US-A1- 2009 267 260    US-A1- 2011 264 254
US-A1- 2012 292 800

**Beschreibung**

Die Erfindung betrifft eine Bandgießanlage, welche ein über Rollen geführtes und angetriebenes Endlosband, eine über dem Band angeordnete Gießeinrichtung, zumindest eine Trocknungseinrichtung und einen zumindest auf die wenigstens eine Trocknungseinrichtung wirkenden Anlagen-Prozessrechner umfasst. Zudem betrifft die Erfindung ein Verfahren zur Herstellung eines Films beziehungsweise einer Platte auf einer Bandgießanlage, bei dem ein über Rollen geführtes Endlosband angetrieben wird, ein Grundmaterial für die Platte / den Film mit Hilfe einer Gießeinrichtung aufgetragen wird und zumindest eine auf das aufgetragene Grundmaterial wirkende Trocknungseinrichtung mit Hilfe eines Anlagen-Prozessrechners geregelt wird. Schließlich betrifft die Erfindung auch ein Computerprogrammprodukt sowie einen Rechner mit einem darauf laufenden Computerprogramm für die Prozessoptimierung einer Bandgießanlage.

Bandgießanlagen und Betriebsverfahren der genannten Art sind grundsätzlich bekannt und werden in der Regel für die Herstellung plattenförmiger oder filmartiger Werkstoffe eingesetzt. Beispielsweise werden sie zur Herstellung von Filmen für die Fotografie, LCD-Bildschirmen oder aber von Kunststein ("Engineered Stone") sowie von Holzwerkstoffen (z.B. Spanplatten, Laminate, etc.) verwendet. Dabei wird ein flüssiger oder pastöser Werkstoff auf ein angetriebenes/bewegtes Band aufgetragen und der zumindest teilweise erstarrte Werkstoff abgehoben. Beispielsweise kann ein flüssiger Film auf das Endlosband gegossen werden, unterschiedliche Prozesse wie Erwärmen, Dehnen, Trocknen etc. durchlaufen und anschließend vom Band abgeschabt werden.

Die einzelnen Abläufe sind messtechnisch schwer oder nur sehr eingeschränkt erfassbar, wodurch sich auch die Regelung eines solchen Prozessen dementsprechend schwierig gestaltet. Insbesondere bereitet das Ausdampfen eines im aufgetragenen Grundmaterial enthaltenen Lösungsmittels Schwierigkeiten, da der Lösungsmittelanteil im Film nicht oder nur sehr aufwändig gemessen werden kann, der Film aber eine relativ genau festgelegte Trocknung durchlaufen sollte, um eine geforderte Qualität des Produkts sicherstellen zu können. Der Film darf weder zu schnell trocknen, da dann die Gefahr entsteht, dass er reißt oder nicht die gewünschte Qualität aufweist, noch zu langsam, da er dann auf einer Haspel, auf welcher der fertige Film aufgewickelt wird, verklebt.

Die komplexe Steuerung/Regelung der Bandgießanlage wird im Betrieb daher in der Regel von einem Anlagen-Prozessrechner übernommen, in dem ein Modell der realen Bandgießanlage abgebildet ist beziehungsweise abläuft, und anhand dessen der reale Prozess geregelt wird. Betriebsparameter des Gießprozesses, die entweder aus technischen oder aus ökonomischen Gründen nicht erfasst werden, können solcherart (d.h. durch Simulation) vom Anlagen-Prozessrechner erfasst und für die Ansteuerung der Bandgießanlage berücksichtigt werden. An diese Stelle wird angemerkt, dass für einen Prozessrechner auch der Begriff Prozessregler gebräuchlich ist und somit synonymisch verwendet werden kann.

Die DE 39 01 378 A1 offenbart zudem die Verwendung eines Modell-Prozessrechners zur Optimierung eines aktuell auf einer Produktionsanlage ablaufenden Prozesses zur Herstellung von Papier.

Aufgrund der komplexen Vorgänge ist die Erreichung eines stationären Zustands, bei dem sowohl die Produktionsgeschwindigkeit als auch die Produktqualität im Einklang stehen generell mühselig und zeitaufwändig. Da auf Bandgießanlagen in der Regel verschiedene Produkte hergestellt werden und daher in gewissen Zeitabständen Produktwechsel durchgeführt werden, muss in regelmäßigen Abständen eine aufwändige Einregelung eines erwünschten Zustands vorgenommen werden. Wegen der großen regelungstechnischen Probleme wird häufig das "Trial-and-Error-Prinzip" verfolgt, wodurch verständlicherweise große Mengen an unerwünschtem Ausschuss produziert werden.

Es ist daher eine Aufgabe der vorliegenden Erfindung, eine verbesserte Bandgießanlage, einen verbesserten Produktionsprozess, ein verbessertes Computerprogrammprodukt sowie einen verbesserten Rechner mit einem solchen Computerprogramm anzugeben. Insbesondere soll der Produktionsprozess rasch und bei wenig Ausschuss im Hinblick auf eine hohe Produktionsgeschwindigkeit bei Einhalten einer geforderten Produktqualität geregelt werden. Im Speziellen betrifft dies Hochlaufvorgänge bei der Inbetriebnahme einer Bandgießanlage sowie bei Wechsel des auf der Bandgießanlage hergestellten Produkts.

Die Aufgabe der Erfindung wird mit einer Bandgießanlage der eingangs genannten Art gelöst, die zusätzlich einen auf ein Modell der Bandgießanlage wirkenden Modell-Prozessrechner umfasst, welcher dazu eingerichtet ist, einen Wert und/oder Verlauf zumindest eines Betriebsparameters der Trocknungseinrichtung, welcher den auf der Bandgießanlage ablaufenden Prozess beeinflusst, im Hinblick auf eine Änderung eines Betriebszustands der Bandgießanlage im Bandgießanlagen-Modell parallel zu und unabhängig von dem auf der Bandgießanlage aktuell ablaufenden Prozess zu berechnen und bei Anforderung der Betriebszustandsänderung in den Anlagen-Prozessrechner zu laden.

Die Aufgabe der Erfindung wird auch mit einem Betriebsverfahren für eine Bandgießanlage gelöst bei dem ein Wert und/oder Verlauf zumindest eines Betriebsparameters der Trocknungseinrichtung, welcher den auf der Bandgießanlage ablaufenden Prozess beeinflusst, mit Hilfe eines auf ein Modell der Bandgießanlage wirkenden Modell-Prozessrechners im Hinblick auf Änderung eines Betriebszustands der Bandgießanlage parallel zu und unabhängig von dem auf der Bandgießanlage aktuell ablaufenden Prozess berechnet und bei Anforderung der Betriebszustandsänderung in die Anlagen-Prozessrechners geladen wird.

Darüber hinaus wird die Aufgabe der Erfindung durch ein Computerprogrammprodukt mit einem darauf gespeicherten Computerprogramm gelöst, das ein Modell einer Bandgießanlage und einen auf das Bandgießanlagen-Modell wirkenden Modell-Prozessrechner enthält und in einen Arbeitsspeicher eines Rechners ladbar ist und einen Wert und/oder einen Verlauf zumindest eines Betriebsparameters einer im Bandgießanlagen-Modell enthaltenen Trocknungseinrichtung, welcher den durch das Bandgießanlagen-Modell modellierten Prozess beeinflusst, im Hinblick auf Änderung eines Betriebszustands des Bandgießanlagen-Modells zu berechnen, wenn das Computerprogramm im Rechner ausgeführt wird. Insbesondere wird ein Verfahren der oben genannten Art ausgeführt, wenn das Computerprogramm im Rechner ausgeführt wird.

Schließlich wird die Aufgabe der Erfindung auch mit einem Rechner mit einem darauf gespeicherten Computerprogramm gelöst, das ein Modell einer Bandgießanlage und einen auf das Bandgießanlagen-Modell wirkenden Modell-Prozessrechner enthält und in einen Arbeitsspeicher des Rechners ladbar ist und einen Wert und/oder einen Verlauf zumindest eines Betriebsparameters einer im Bandgießanlagen-Modell enthaltenen Trocknungseinrichtung, weleher den durch das Bandgießanlagen-Modell modellierten Prozess beeinflusst, im Hinblick auf Änderung eines Betriebszustands des Bandgießanlagen-Modells zu berechnen, wenn das Computerprogramm im Rechner ausgeführt wird. Insbesondere wird ein Verfahren der oben genannten Art ausgeführt, wenn das Computerprogramm im Rechner ausgeführt wird.

Dadurch wird der Vorteil erzielt, dass der Produktionsprozess virtuell und somit ohne Ausschuss optimiert werden kann und erst bei Erreichung eines gewünschten Ziels in die Realität umgesetzt wird. Insbesondere kann ein Produktwechsel im Hintergrund vorbereitet werden, sodass die Produktumstellung auf der realen Bandgießanlage rasch und problemlos vonstattengeht. Vorteilhaft wird dabei eine sich immer wieder ändernde Ausgangssituation berücksichtigt. So erfolgt ein Produktwechsel auf ein bestimmtes Produkt nicht immer in der gleichen Weise, da je nach Betriebszustand der Bandgießanlage immer eine andere Ausgangssituation vorliegt, welche durch den Modell-Prozessrechner nun entsprechend berücksichtigt werden kann.

Als "Änderung eines Betriebszustands" kann daher insbesondere ein Wechsel des auf der Bandgießanlage hergestellten Produkts oder auch die Inbetriebnahme der Bandgießanlage verstanden werden.

Demzufolge wird die Aufgabe der Erfindung im Speziellen mit einer Bandgießanlage der eingangs genannten Art gelöst, die zusätzlich einen auf ein Modell der Bandgießanlage wirkenden Modell-Prozessrechner umfasst, welcher dazu eingerichtet ist, einen Wert und/oder Verlauf zumindest eines Betriebsparameters der Trocknungseinrichtung, welcher für die Beeinflussung des auf der Bandgießanlage ablaufenden Prozesses geeignet ist, im Hinblick auf die Herstellung eines ersten Produkts zu berechnen, ohne während der genannten Berechnung einen Initialzustand der Bandgießanlage und/oder die Herstellung eines zweiten Produkts auf der Bandgießanlage zu beeinflussen und

- den besagten Wert und/oder Verlauf des zumindest eines Betriebsparameters in den Anlagen-Prozessrechner zu laden, wenn eine Herstellung des ersten Produkts angefordert wird.

Demzufolge wird die Aufgabe der Erfindung im Speziellen auch mit einem Verfahren zur Herstellung eines ersten/zweiten Produkts auf einer Bandgießanlage gelöst, umfassend die Schritte

- Antreiben eines über Bandrollen geführten Endlosbands,

- Auftragen eines Grundmaterials für die Herstellung des ersten/zweiten Produkts mit Hilfe einer Gießeinrichtung,

- Ansteuern/Regeln zumindest einer auf das aufgetragene Grundmaterial wirkenden Trocknungseinrichtung mit Hilfe eines Anlagen-Prozessrechners,

dadurch gekennzeichnet, dass

- ein Wert und/oder Verlauf zumindest eines Betriebsparameters der Trocknungseinrichtung, welcher für die Beeinflussung des auf der Bandgießanlage ablaufenden Prozesses geeignet ist, mit Hilfe eines auf ein Modell der Bandgießanlage wirkenden Modell-Prozessrechners im Hinblick auf die Herstellung des ersten Produkts berechnet wird, wobei während der genannten Berechnung ein zweites Produkt davon unbeeinflusst auf der Bandgießanlage hergestellt wird oder sich die Bandgießanlage in einem Initialzustand befindet, und

- der besagte Wert und/oder Verlauf des zumindest eines Betriebsparameters in den Anlagen-Prozessrechner geladen wird, wenn eine Herstellung des ersten Produkts angefordert wird.

Besonders vorteilhaft ist es, wenn die Berechnung des Wertes und/oder Verlaufs des zumindest einen Betriebsparameters ausgehend von einem Ausgangszustand erfolgt, welcher im Wesentlichen dem aktuell und real vorliegenden Zustand der Bandgießanlage entspricht. "Im Wesentlichen" bedeutet Im gegebenen Zusammenhang insbesondere "entsprechend den Möglichkeiten der eingesetzten Sensoren, den realen Zustand der Bandgießanlage zu erfassen und wiederzugeben". Dadurch können Hochlaufvorgänge und/oder Produktwechsel besonders rasch durchgeführt werden, da diese nicht von einem Standard-Ausgangszustand aus berechnet werden, sondern eben vom aktuell und real vorliegenden Zustand der Bandgießanlage.

An dieser Stelle wird angemerkt, dass die DE 39 01 378 A1 die Verwendung eines Modell-Prozessrechners prinzipiell offenbart, jedoch nur im Zusammenhang mit der Herstellung von Papier und nur im Zusammenhang mit der Optimierung des aktuell ablaufenden Prozesses. Nicht offenbart ist dagegen die Optimierung einer Betriebszustandsänderung, zum Beispiel der Übergang von einem Initialzustand in die Produktion beziehungsweise ein Wechsel von Produkten.

Weitere vorteilhafte Ausgestaltungen und Weiterbildungen der Erfindung ergeben sich aus den Unteransprüchen sowie aus der Beschreibung in Zusammenschau mit den Figuren.

Vorteilhaft ist es, wenn als Betriebsparameter eine Drehzahl eines Gebläses der Trocknungseinrichtung und/oder eine Temperatur eines Heizers der Trocknungseinrichtung und/oder ein von der genannten Drehzahl beziehungsweise der genannten Temperatur abhängiger Parameter vorgesehen ist. Dies sind Betriebsparameter, welche den Produktionsprozess relativ stark beeinflussen und mit deren Hilfe eine Bandgießanlage - eine entsprechende Parametervorgabe vorausgesetzt - rasch einen gewünschten Sollzustand erreicht.

Vorteilhaft ist es auch, wenn der Modell-Prozessrechner dazu eingerichtet ist, einen Wert und/oder Verlauf zumindest eines Betriebsparameters des Endlosbands und/oder der Gießeinrichtung, welcher den auf der Bandgießanlage ablaufenden Prozess beeinflusst, im Hinblick auf eine Änderung eines Betriebszustands der Bandgießanlage (respektive im Hinblick auf die Herstellung des ersten Produkts) im Bandgießanlagen-Modell parallel zu und unabhängig von dem auf der Bandgießanlage aktuell ablaufenden Prozess zu berechnen und bei Anforderung der Betriebszustandsänderung (respektive bei Anforderung der Herstellung des ersten Produkts) in den Anlagen-Prozessrechner zu laden. Insbesondere kann als Betriebsparameter eine Geschwindigkeit des Bands und/oder eine Zufuhrmenge der Gießeinrichtung und/oder ein von der genannten Geschwindigkeit beziehungsweise der genannten Zufuhrmenge abhängiger Parameter vorgesehen sein. Dies sind weitere wichtige Parameter zur Beeinflussung des Herstellungsprozesses des Films, die dementsprechend vorteilhaft regelungstechnisch behandelt werden.

Günstig ist es, wenn als Betriebsparameter eine Stellgröße für die zumindest eine Trocknungseinrichtung / das Endlosband / die Gießeinrichtung vorgesehen ist. Das heißt, dass die zumindest eine Trocknungseinrichtung / das Endlosband / die Gießeinrichtung gesteuert wird und als Betriebsparameter demgemäß eine Stellgröße für die genannten Einrichtungen vorgesehen ist.

Günstig ist es weiterhin, wenn wenigstens eine Regelung mit der zumindest einen Trocknungseinrichtung / dem Endlosband / der Gießeinrichtung verbunden ist und als Betriebsparameter eine Sollgröße für die genannte Regelung vorgesehen ist. Das heißt, dass die zumindest eine Trocknungseinrichtung / das Endlosband / die Gießeinrichtung geregelt wird und als Betriebsparameter demgemäß eine Regelgröße für die genannten Einrichtungen vorgesehen ist.

Besonders vorteilhaft ist es, wenn der Anlagen-Prozessregler auf ein Betriebs-Modell wirkt, welches eine Untermenge des Bandgießanlagen-Modells darstellt, und die nicht im Betriebs-Modell enthaltenen Eingänge durch mit dem Anlagen-Prozessregler verbundene Sensoren gebildet sind. Damit der Anlagen-Prozessregler eine möglichst wahrheitsgetreue Interpretation des real ablaufenden Prozesses erhält, werden - soweit es technische und ökonomische Gründe es zulassen - Sensoren zur Erfassung von Parametern des Herstellungsprozesses vorgesehen. Beispielsweise können diese Qualitätsmerkmale des hergestellten Films (zum Beispiel dessen Dichte, dessen Transparenz, eine Anzahl und Größe an Einschlüssen von Luft und/oder Fremdkörpern, eine Ebenheit, usw.) oder den Anteil des enthaltenen Lösungsmittels betreffen. Zudem können beispielsweise auch eine Bandgeschwindigkeit, eine Lufttemperatur, eine Luftfeuchtigkeit und dergleichen messtechnisch erfasst werden. Da diese Werte messtechnisch erfasst werden, brauchen sie natürlich nicht modelliert/simuliert werden. Das im Anlagen-Prozessrechner laufende Betriebs-Modell ist daher vergleichsweise nahe an der Realität und sehr wahrscheinlich näher an der Realität als das im Modell-Prozessrechner laufende Bandgießanlagen-Modell. Die aus dem Betriebs-Modell gewonnenen Erfahrungen können somit auch dazu genutzt werden, das Bandgießanlagen-Modell laufend zu verbessern und stärker den realen Gegebenheiten anzupassen.

Besonders vorteilhaft ist es, wenn der Wert und/oder der Verlauf des zumindest einen Betriebsparameters im Hinblick auf minimalen Energieaufwand oder minimale Zeit bis zur Erreichung eines stabilen Betriebszustands oder maximale Bandgeschwindigkeit oder minimalen Materialeinsatz berechnet wird. Dadurch kann der auf der Bandgießanlage laufende Prozess besonders wirtschaftlich erfolgen. Dabei wird eine entsprechende Prämisse aufgestellt und der modellierte Prozess im Hinblick auf diese Prämisse optimiert. In einer weiteren vorteilhaften Ausführungsform wird (zusätzlich oder alternativ) die Qualität des hergestellten Films als Prämisse herangezogen und der Wert und/oder der Verlauf des zumindest einen Betriebsparameters im Hinblick auf eine geforderte Qualität des hergestellten Films / der hergestellten Platte berechnet. Beispielsweise kann die Qualität die Dichte des hergestellten Films, dessen Transparenz, eine Anzahl und Größe an Einschlüssen von Luft und/oder Fremdkörpern, eine Ebenheit oder dergleichen betreffen.

Besonders vorteilhaft ist es schließlich auch, wenn die Betriebszustandsänderung (respektive die Herstellung des ersten Produkts) anhand der Formel für den Wärmeübergang

$$\dot{q} = \alpha \cdot A \cdot \Delta T$$

und die Formel für den Stofftransport

$$\dot{m} = \widetilde{M} \cdot \beta \cdot \tilde{\rho}_g \cdot \ln\left(\frac{1 - \tilde{y}_\infty}{1 - \tilde{y}_{Ph}}\right)$$

berechnet wird, wobei q den Wärmestrom, $\alpha$ den Wärmeübergangskoeffizienten, A die Fläche, welche für den Wärmestrom zur Verfügung steht, $\Delta T$ die Temperaturdifferenz $T_\infty$ - $T_{Oberfläche}$ zwischen einer von der Trocknungseinrichtung zugeführten Luft und der Oberfläche der der Platte/des Films, $\dot{m}$ den Massenstrom, $\widetilde{M}$ die Molmasse, $\beta$ den Stoffübergangskoeffizienten, $\tilde{\rho}_g$ die molare Dichte in der Gasphase, $\tilde{y}_\infty$ den Molenbruch in der Gaspahse und $\tilde{y}_{Ph}$ den Molenbruch an der Phasengrenze darstellt. Diese Formeln beschreiben den Trocknungsprozess des Films, wobei q den für die Trocknung in den Film fließenden Wärmestrom und m den Massenstrom des aus dem Grundmaterial ausdampfenden Lösungsmittels angibt. $\dot{q}$ ist im Wesentlichen abhängig von der Leistung der Trocknungseinrichtung. A entspricht der (freien) Oberfläche des Films. Ergänzend werden noch die physikalischen Einheiten der genannten Parameter angegeben.

| | |
|---|---|
| $\dot{q}$ | Wärmestrom [J·s$^{-1}$] |
| $\alpha$ | Wärmeübergangskoeffizient [J·s$^{-1}$·m$^{-2}$·K$^{-1}$] |
| A | Fläche, welche für den Wärmestrom zur Verfügung steht [m$^2$] |
| $\Delta T$ | Temperaturdifferenz $T_\infty$ - $T_{Oberfläche}$ [K] |
| $\dot{m}$ | Massenstrom [kg · m$^{-2}$ · s$^{-1}$] |
| $\widetilde{M}$ | Molmasse [kg · mol$^{-1}$] |
| $\beta$ | Stoffübergangskoeffizient [m · s$^{-1}$] |
| $\tilde{\rho}_g$ | molare Dichte in der Gasphase [mol · m$^{-3}$] |
| $\tilde{y}_\infty$ | Molenbruch beziehungsweise Stoffmengenanteil in der Gaspahse [-] |
| $\tilde{y}_{Ph}$ | Molenbruch beziehungsweise Stoffmengenanteil an der Phasengrenze [-] |

An dieser Stelle wird angemerkt, dass sich die zum Herstellungsverfahren offenbarten Varianten und die daraus resultierenden Vorteile gleichermaßen auf die offenbarte Vorrichtung beziehen und umgekehrt.

Zum besseren Verständnis der Erfindung wird diese anhand der nachfolgenden Figuren näher erläutert.

Es zeigen jeweils in stark vereinfachter, schematischer Darstellung:

Fig. 1 ein erstes schematisch dargestelltes Beispiel einer Bandgießanlage;

Fig. 2 einen beispielhaften Verlauf des Lösungsmittelanteils in dem mit der Bandgießanlage hergestellten Film;

Fig. 3 einen beispielhaften Verlauf der Bandgeschwindigkeit beim Hochfahren der Bandgießanlage;

Fig. 4 einen erwünschten Verlauf für die Qualität des hergestellten Films;

Fig. 5 weitere beispielhafte Parameterverläufe beim Hochfahren der Bandgießanlage;

Fig. 6 zwei beispielhafte Verläufe des Lösungsmittelanteils in dem mit der Bandgießanlage hergestellten Film im Vergleich und

Fig. 7 ein weiteres Beispiel einer Bandgießanlage mit einer Reihe von Sensoren zur Erfassung verschiedener Prozessparameter;

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

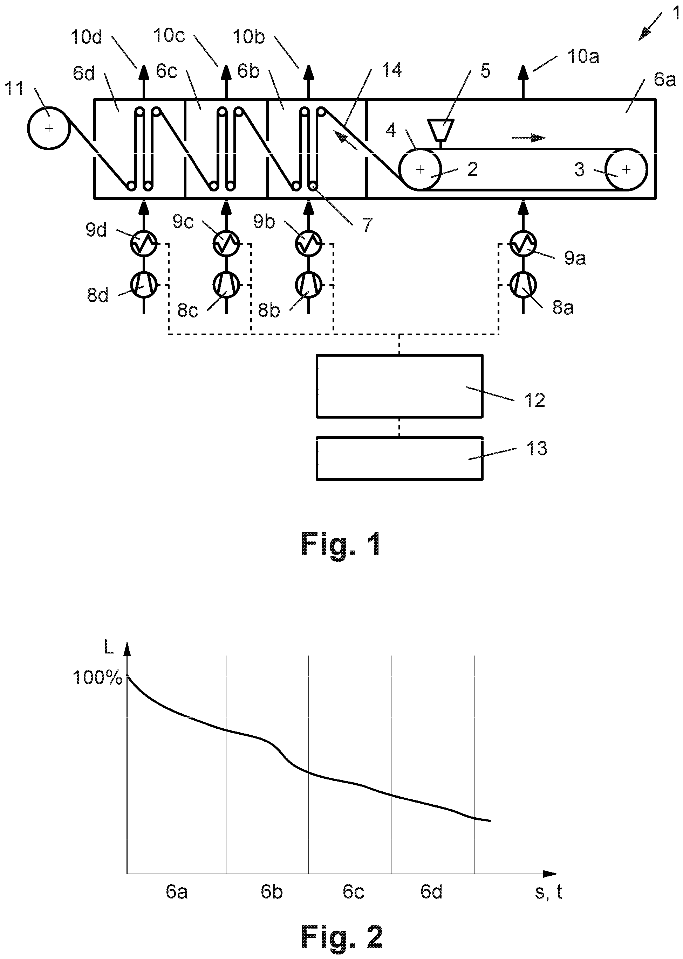

Fig. 1 zeigt eine Bandgießanlage 1, welche ein über Bandrollen 2, 3 geführtes und angetriebenes Endlosband 4 (zumeist aus Metall) und eine über dem Band 4 angeordnete Gießeinrichtung 5 umfasst. Die Bandrollen 2, 3, das Endlosband 4 und die Gießeinrichtung 5 befinden sich in einer ersten Kammer 6a. Darüber hinaus umfasst die Bandgießanlage 1 weitere Kammern 6b..6d, in denen sich jeweils mehrere Umlenkrollen 7 befinden. An die Kammern 6a..6d ist jeweils eine Trocknungseinrichtung angeschlossen, die in diesem konkreten Beispiel je ein Gebläse 8a..8d sowie je einen Heizer beziehungsweise ein Heizregister 9a..9d aufweist. Jeder Trocknungseinrichtung 8a..8d, 9a..9d ist auch ein Auslass 10a..10d zugeordnet, welcher an die Kammern 6a..6d angeschlossen ist. Darüber hinaus umfasst die Bandgießanlage 1 noch eine Haspel 11 beziehungsweise Wickelvorrichtung sowie einen Anlagen-Prozessrechner 12 und einen Modell-Prozessrechner 13.

Grundsätzlich können einer Kammer 6a..6d mehrere Trocknungseinrichtungen 8a..8d, 9a..9d zugewiesen sein, das heißt es können mehrere Gebläse 8a..8d und Heizregister 9a..9d je Kammer 6a..6d vorgesehen sein. Zudem können auch mehrere Auslässe 10a..10d und/oder Einlässe je Kammer 6a..6d vorhanden sein. Dabei entspricht die Anzahl der Trocknungseinrichtungen 8a..8d, 9a..9d nicht zwingend der Anzahl der Einlässe und/oder Auslässe 10a..10d, das heißt es können auch mehr oder weniger Einlässe/Auslässe 10a..10d als Trocknungseinrichtungen 8a..8d, 9a..9d vorhanden sein. Auch kann die Anzahl der Einlässe von der Anzahl der Auslässe 10a..10d verschieden sein. Zudem sind prinzipiell auch Kammern 6a..6d denkbar, denen keine Trocknungseinrichtungen 8a..8d, 9a..9d zugewiesen sind. Schließlich ist es auch möglich, dass im Bereich des Endlosbands 4 mehrere Kammern vorgesehen sind, welche das Band 4 respektive das aufgetragene Grundmaterial durchläuft. Das zu den Kammern 6a..6d Gesagte ist auch auf diese Kammern sinngemäß anwendbar.

Die Funktion der in der Fig. 1 dargestellten Bandgießanlage 1 ist wie folgt:

Mit Hilfe der Gießeinrichtung 5 wird flüssiges oder pastöses Grundmaterial auf das Endlosband 4 aufgetragen, das sich von den Bandrollen 2, 3 angetrieben in die angegebene Richtung bewegt. Von den Bandrollen 2, 3 ist mindestens eine motorisch angetrieben. Auf dem Band 4 wird das aufgetragene Grundmaterial glattgestrichen und/oder verläuft von selbst. Das Grundmaterial enthält flüchtige Bestandteile, zum Beispiel Lösungsmittel, die in der Kammer 6a teilweise entweichen, wodurch das Grundmaterial etwas trocknet und fester wird. Am linken Ende der Kammer 6a wird das zumindest teilweise erstarrte Grundmaterial vom Endlosband 4 abgehoben und tritt als Folie oder Film 14 in die Kammer 6b ein. Dort läuft es um mehrere Umlenkrollen 7 und wird sukzessive weiter getrocknet. Dieser Vorgang wiederholt sich in den Kammern 6c und 6d bis der Film 14 schließlich soweit getrocknet ist, dass er auf die Haspel/Wickelvorrichtung 11 aufgewickelt werden kann.

Um die Trocknung zu beschleunigen und in kontrollierter Weise ablaufen zu lassen, steuert der Anlagen-Prozessrechner 12 die Gebläse 8a..8d und die Heizregister 9a..9d in einer Weise an, dass sich ein erwünschter oder vorgegebener Verlauf des Lösungsmittelanteils im Film 14 ergibt.

Fig. 2 zeigt einen beispielhaften Verlauf des normierten Lösungsmittelanteils L im Film 14 über dem Weg s respektive über die Zeit t. Dabei sind die einzelnen Abschnitte den Kammern 6a..6d zugeordnet. Gut erkennbar ist, dass der Lösungsmittelanteil L sukzessive, jedoch mit unterschiedlichem Gradienten abnimmt. Die dabei ablaufenden Vorgänge sind vergleichsweise komplex und schwer vorhersagbar. Zudem lässt sich der Lösungsmittelanteil L nur schwer messen. Dennoch soll die Abnahme des Lösungsmittelanteils L in erwünschter oder vorgegebener Weise verlaufen. Der Film 14 darf weder zu schnell trocknen, da dann die Gefahr entsteht, dass er reißt oder nicht die gewünschte Qualität aufweist, noch zu langsam, da er dann auf der Haspel 11 verklebt. Im Sinne einer effizienten Produktion des Films 14 ist in der Regel zudem eine möglichst hohe Geschwindigkeit des Bands 4 erwünscht.

Die komplexe Steuerung/Regelung der Bandgießanlage 1 wird im Betrieb vom Anlagen-Prozessrechner 12 übernommen. Aufgrund der komplexen Vorgänge ist die Erreichung eines stationären Zustands, bei dem sowohl die Produktionsgeschwindigkeit als auch die Produktqualität im Einklang stehen, mühselig und zeitaufwändig. Da auf Bandgießanlagen 1 in der Regel verschiedene Produkte hergestellt werden und daher in gewissen Zeitabständen Produktwechsel durchgeführt werden, muss in regelmäßigen Abständen eine aufwändige Einregelung eines erwünschten Zustands vorgenommen werden. Da beispielsweise der Lösungsmittelanteil L wie erwähnt nur schwer bis gar nicht messbar ist, wird in der Regel das "Trial-and-Error-Prinzip" verfolgt, wodurch verständlicherweise große Mengen an unerwünschtem Ausschuss produziert werden.

Daher wird dem Anlagen-Prozessrechner 12 ein Modell-Prozessrechner 13 zur Seite gestellt, welcher auf ein Modell der Bandgießanlage 1 wirkt und dazu eingerichtet ist, einen Wert und/oder Verlauf zumindest eines Betriebsparameters der Trocknungseinrichtung 8a..8d, 9a..9d, welcher den auf der Bandgießanlage 1 ablaufenden Prozess beeinflusst, im Hinblick auf eine Änderung eines Betriebszustands der Bandgießanlage 1 im Bandgießanlagen-Modell parallel zu und unabhängig von dem auf der Bandgießanlage 1 aktuell ablaufenden Prozess zu berechnen und bei Anforderung der Betriebszustandsänderung in den Anlagen-Prozessrechner 12 zu laden.

Ein Verfahren zur Herstellung eines Films 14 beziehungsweise einer Platte auf einer Bandgießanlage 1, umfasst somit folgende Schritte:

- Antreiben eines über Rollen 2, 3 geführten Endlosbands 4,
- Auftragen eines Grundmaterials für die Platte/den Film 14 mit Hilfe einer Gießeinrichtung 5,
- Ansteuern/Regeln zumindest einer auf das aufgetragene Grundmaterial wirkenden Trocknungseinrichtung 8a..8d, 9a..9d mit Hilfe eines Anlagen-Prozessrechners 12 und
- Berechnen eines Wertes und/oder Verlaufs zumindest eines Betriebsparameters der Trocknungseinrichtung 8a..8d, 9a..9d, welcher den auf der Bandgießanlage 1 ablaufenden Prozess beeinflusst, mit Hilfe eines auf ein Modell der Bandgießanlage 1 wirkenden Modell-Prozessrechners 13 im Hinblick auf Änderung eines Betriebszustands der Bandgießanlage 1. Die Berechnung findet dabei parallel zu und unabhängig von dem auf der Bandgießanlage 1 aktuell ablaufenden Prozess statt, und die berechneten Werte/Verläufe werden bei Anforderung der Betriebszustandsänderung in den Anlagen-Prozessrechner 12 geladen.

Dadurch gelingt das Hochfahren der Bandgießanlage 1 bei der Inbetriebnahme oder einem Produktwechsel besonders gut.

Insbesondere ist es daher von Vorteil, wenn das Verfahren zur Herstellung eines ersten/zweiten Produkts auf einer Bandgießanlage 1 folgende Schritte umfasst:

- Antreiben eines über Bandrollen 2, 3 geführten Endlosbands 4,

- Auftragen eines Grundmaterials für die Herstellung des ersten/zweiten Produkts mit Hilfe einer Gießeinrichtung 5,

- Ansteuern/Regeln zumindest einer auf das aufgetragene Grundmaterial wirkenden Trocknungseinrichtung 8a..8d, 9a..9d mit Hilfe eines Anlagen-Prozessrechners 12, und

- Berechnen eines Wertes und/oder Verlaufs zumindest eines Betriebsparameters der Trocknungseinrichtung 8a..8d, 9a..9d, welcher für die Beeinflussung des auf der Bandgießanlage 1 ablaufenden Prozesses geeignet ist, mit Hilfe eines auf ein Modell der Bandgießanlage 1 wirkenden Modell-Prozessrechners 13 im Hinblick auf die Herstellung des ersten Produkts, wobei während der genannten Berechnung ein zweites Produkt davon unbeeinflusst auf der Bandgießanlage 1 hergestellt wird oder sich die Bandgießanlage 1 in einem Initialzustand befindet, und

- der besagte Wert und/oder Verlauf des zumindest eines Betriebsparameters in den Anlagen-Prozessrechner 12 geladen wird, wenn eine Herstellung des ersten Produkts angefordert wird.

Besonders vorteilhaft ist es dabei, wenn die Berechnung des Wertes und/oder Verlaufs des zumindest einen Betriebsparameters ausgehend von einem Ausgangszustand erfolgt, welcher im Wesentlichen dem aktuell und real vorliegenden Zustand der Bandgießanlage 1 entspricht. Dadurch können Hochlaufvorgänge und/oder Produktwechsel besonders rasch durchgeführt werden, da diese nicht von einem Standard-Ausgangszustand aus berechnet werden, sondern eben vom aktuell und real vorliegenden Zustand der Bandgießanlage 1.

Selbstverständlich kann der Modell-Prozessrechner 13 auch dazu genutzt werden, den aktuell laufenden Prozess zu optimieren. Dabei werden im Modell der Bandgießanlage 1 Änderungen vorgenommen und die Auswirkungen beobachtet. Wird eine gegenüber dem realen Prozess verbesserte Einstellung gefunden, so wird diese vom Modell-Prozessrechner 13 in den Anlagen-Prozessrechner 12 geladen. Umgekehrt kann das Modell der Bandgießanlage 1 mit den im Anlagen-Prozessrechner 12 vorliegenden Werten laufend an die Realität angepasst und verbessert werden.

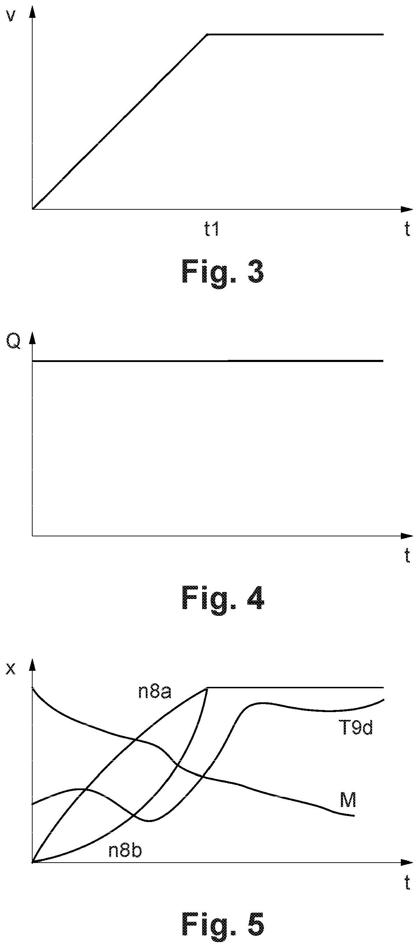

Rein beispielhaft werden in den Figuren 3 bis 5 einige Anlagenparameter während eines Hochfahrens der Bandgießanlage 1 betrachtet. Fig. 3 zeigt einen beispielhaften zeitlichen Verlauf der Bandgeschwindigkeit v. Aus der Fig. 3 ist erkennbar, dass die Bandgeschwindigkeit v von null linear auf einen stationären Wert erhöht wird. Während dieses Hochlaufens soll die Qualität Q während der gesamten Zeit mehr oder minder konstant sein und eine gewünschtes beziehungsweise vorgebbares Niveau erreichen, so wie dies in der Fig. 4 dargestellt ist. Die Qualität Q ist hier als abstrakter Wert vorgegeben. Selbstverständlich existieren real eine Fülle an Kriterien, um die Qualität des hergestellten Films 14 beurteilen zu können. Beispielsweise kann die Dichte, die Transparenz, die Anzahl und Größe an Einschlüssen von Luft und/oder Fremdkörpern, eine Ebenheit, usw. herangezogen werden. In der Fig. 4 kann die Qualität Q daher beispielsweise einen dezidierten Parameter, zum Beispiel aber auch eine (gewichtete) Summe von Parametern oder auch eine andere Maßzahl, welche die Qualität Q der Folie 14 widerspiegelt, darstellen.

Zur Erreichung dieses Ziels sind Betriebsparameter x der Bandgießanlage 1 in einer bestimmten Weise vorzugeben.

Beispielsweise kann als Betriebsparameter x eine Drehzahl eines Gebläses 8a..8d der Trocknungseinrichtung und/oder eine Temperatur eines Heizers 9a..9d der Trocknungseinrichtung und/oder ein von der genannten Drehzahl beziehungsweise der genannten Temperatur abhängiger Parameter vorgesehen sein.

Beispielsweise kann als Betriebsparameter x alternativ oder zusätzlich zu der bereits erwähnten Geschwindigkeit des Bands 4 auch eine Zufuhrmenge der Gießeinrichtung 5 und/oder ein von der genannten Geschwindigkeit beziehungsweise der genannten Zufuhrmenge abhängiger Parameter vorgesehen sein. Das heißt, dass im Modell-Prozessrechner 13 nicht nur die Trocknungseinrichtungen 8a..8d, 9a..9d betreffende Parameter berechnet werden können, sondern der Modell-Prozessrechner 13 kann auch dazu eingerichtet sein, einen Wert und/oder Verlauf zumindest eines Betriebsparameters des Endlosbands 4 und/oder der Gießeinrichtung 5, welcher den auf der Bandgießanlage 1 ablaufenden Prozess beeinflusst, im Hinblick auf eine Änderung eines Betriebszustands (respektive im Hinblick auf die Herstellung des ersten Produkts) der Bandgießanlage 1 im Bandgießanlagen-Modell parallel zu und unabhängig von dem auf der Bandgießanlage 1 aktuell ablaufenden Prozess zu berechnen, welcher bei Anforderung der Betriebszustandsänderung (respektive bei Anforderung der Herstellung des ersten Produkts) in den Anlagen-Prozessrechner 12 geladen wird.

In der Fig. 5 sind rein beispielhaft Zeitverläufe einiger Betriebsparameter x dargestellt, konkret die Drehzahl n8a des Gebläses 8a, die Drehzahl n8b des Gebläses 8b, die Vorlauftemperatur T9d des Heizregisters 9d sowie die Zufuhrmenge M der Gießeinrichtung 5.

Es wird ausdrücklich darauf hingewiesen, dass diese Verläufe rein illustrativ sind und nicht notwendigerweise die Realität widerspiegeln. Zudem ist willkürlich nur ein kleiner Ausschnitt der in der Realität beeinflussenden Betriebsparameter x dargestellt, sodass die Darstellung übersichtlich bleibt. Zudem wird darauf hingewiesen, dass es nicht notwendigerweise nur eine einzige Lösung zur Erreichung des in den Figuren 3 und 4 dargestellten Ziels gibt, sondern auch andere Wege zum selben Ziel führen können. Zudem ist auch die in den Figuren 3 und 4 dargestellte Vorgabe rein willkürlich gewählt, und es können auch andere Vorgaben beim Hochfahren einer Bandgießanlage 1 gemacht werden.

Ein Wert und/oder Verlauf eines Betriebsparameters x kann nicht nur im Hinblick auf eine zu erreichende Qualität Q, sondern beispielsweise auch im Hinblick auf minimalen Energieaufwand oder minimale Zeit t1 bis zur Erreichung eines stabilen Betriebszustands oder maximale Bandgeschwindigkeit v oder minimalen Materialeinsatz M berechnet werden.

Generell kann eine Betriebszustandsänderung (respektive die Herstellung des ersten Produkts) anhand der Formel für den Wärmeübergang

$$\dot{q} = \alpha \cdot A \cdot \Delta T$$

und der Formel für den Stofftransport

$$\dot{m} = \widetilde{M} \cdot \beta \cdot \tilde{\rho}_g \cdot \ln\left(\frac{1 - \tilde{y}_\infty}{1 - \tilde{y}_{Ph}}\right)$$

berechnet werden, wobei q den Wärmestrom in den Film 14, α den Wärmeübergangskoeffizienten in den Film 14, A die Fläche des Films 14, welche für den Wärmestrom zur Verfügung steht, ΔT die Temperaturdifferenz $T_\infty$ - $T_{Oberfläche}$ zwischen einer von der Trocknungseinrichtung zugeführten Luft und der Oberfläche der des Films 14, ṁ den Massenstrom aus dem Film 14, $\widetilde{M}$ die Molmasse, β den Stoffübergangskoeffizienten, $\tilde{\rho}_g$ die molare Dichte in der Gasphase, $\tilde{y}_\infty$ den Molenbruch in der Gaspahse und $\tilde{y}_{Ph}$ den Molenbruch an der Phasengrenze darstellt. Diese Formeln beschreiben den Trocknungsprozess des Films 14.

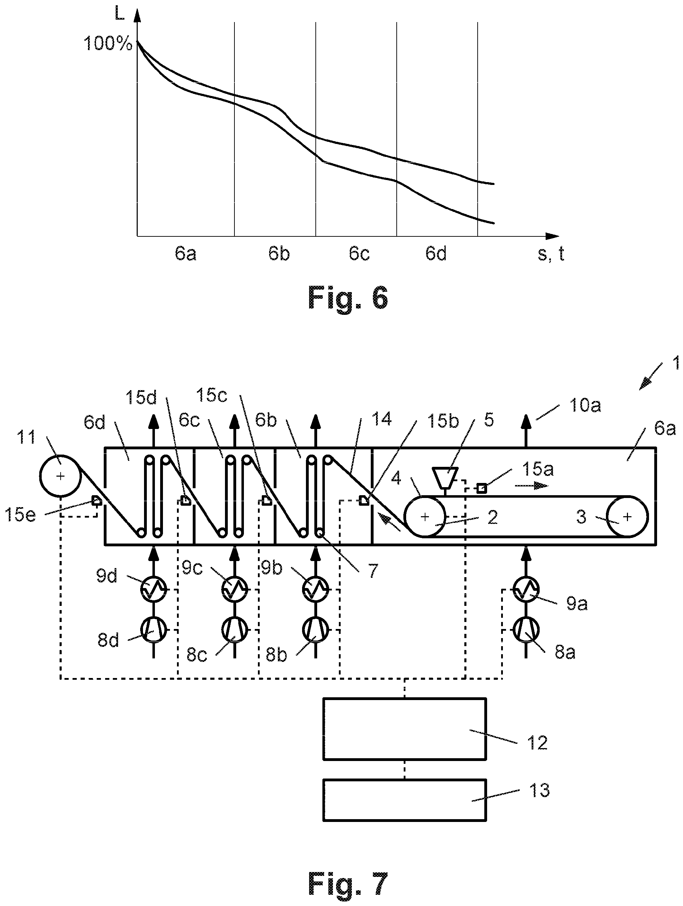

Fig. 6 zeigt nun beispielhaft den zeitlichen/örtlichen Verlauf des Lösungsmittelanteils L für verschiedene Produkte/Filme 14. Dabei ist gut erkennbar, dass die Abnahme des Lösungsmittelanteils L auf verschiedene Weise erfolgt. Ausgehend von einem aktuell auf der Bandgießanlage 1 laufenden (stationären) Prozess gemäß des oberen Verlaufs kann der Modell-Prozessrechner 13 unabhängig davon (das heißt "off-line") die Umstellung auf ein anderes Produkt anhand des Modells der Bandgießanlage 1 vorbereiten und gelangt dann beispielsweise zu dem unteren Verlauf. Wird der (bereits vorbereitete) Produktwechsel tatsächlich ausgeführt, so werden die Betriebsparameter x in den Anlagen-Prozessrechner 12 geladen, wodurch in Folge der neue Prozess gemäß dem unteren Verlauf ausgeführt wird.

Fig. 6 kann aber auch dahingehend aufgefasst werden, dass es sich um Lösungsmittelanteil-Verläufe für ein und dasselbe Produkt handelt, das mit unterschiedlicher Einstellung der Betriebsparameter x hergestellt wurde. Üblicherweise wird einem hohen Ausdampfungsgrad der Vorzug gegeben, das heißt dass die untere Kurve in der Regel bevorzugt wird. Ausgehend von einem aktuell auf der Bandgießanlage 1 laufenden (stationären) Prozess gemäß des oberen Verlaufs kann der Modell-Prozessrechner 13 unabhängig davon (das heißt "off-line") den Prozess im Modell der Bandgießanlage 1 optimieren und gelangt dann beispielsweise zu dem unteren Verlauf, beispielsweise bei erhöhter Bandgeschwindigkeit v, geringerem Energieeinsatz und trotzdem gleichbleibender Qualität Q. Liegt ein solches Ergebnis vor, so werden die Betriebsparameter x in den Anlagen-Prozessrechner 12 geladen, wodurch in Folge auch der reale Prozess gemäß dem unteren Verlauf ausgeführt wird.

Ergänzend zeigt Fig. 7 eine Bandgießanlage 1, in der auch Steuerleitungen zum Antrieb der Bandrolle 2, zur Gießeinrichtung 5 sowie zur Haspel 11 eingezeichnet sind. Die Eignung der Betriebsparameter x für den Antrieb der Bandrolle 2 und für die Gießeinrichtung 5 wurde ja schon weiter oben erläutert. Die Haspel 11 kann beispielsweise im Hinblick auf eine auf den Film 14 aufzubringende Zugspannung angesteuert werden. Selbstverständlich können auch die Umlenkrollen 7 prinzipiell ansteuerbar sein, wodurch zum Beispiel ein gewünschter Verlauf der Zugspannung über den Weg s realisiert werden kann.

Darüber hinaus sind in der Fig. 7 auch Sensoren 15a..15e vorgesehen, welche beispielsweise zur Messung des Lösungsmittelgehalts L des Films 14 vorgesehen sein können, beispielsweise aber auch zur Ermittlung eines Qualitätsparameters des Films 14 (z.B. Dichte, Transparenz, Anzahl und Größe an Einschlüssen von Luft und/oder Fremdkörpern, Ebenheit, usw.). Selbstverständlich können auch verschiedene Sensoren 15a..15e sowie mehr oder weniger Sensoren 15a..15e eingesetzt werden, und die Sensoren 15a..15e können sich auch an anderer Stelle befinden. Die Fig. 7 soll daher nur das Prinzip des Einsatzes von Sensoren 15a..15e verdeutlichen. Mit Hilfe der Sensoren 15a..15e kann ein realer Zustand des Prozesses ermittelt werden, zumindest ausschnittsweise. Demgemäß kann der Anlagen-Prozessrechner 12 auf ein Betriebs-Modell wirken, welches eine Untermenge des für den Modell-Prozessrechner 13 vorgesehenen Bandgießanlagen-Modells darstellt. Nicht im Betriebs-Modell enthaltene Eingänge sind durch die mit dem Anlagen- Prozessrechner 12 verbundene Sensoren 15a..15e gebildet. Das heißt, durch das im Anlagen- Prozessrechner 12 laufende Modell wird (nur) jener Teil der Bandgießanlage 1 modelliert beziehungsweise simuliert, welcher eben nicht durch Sensoren 15a..15e erfasst ist.

An dieser Stelle wird darauf hingewiesen, dass also nicht nur der Modell- Prozessrechner 13 ein Modell der Bandgießanlage 1 aufweist, sondern - in Ermangelung von Sensoren 15a..15e, welche den realen Prozess korrekt und vollständig widergeben - auch der Anlagen-Prozessrechner 12. Die beiden Modelle können identisch strukturiert sein, der reale Prozess kann aber auch durch Sensoren 15a..15e gestützt geregelt werden. In diesem Fall bildet das im Anlagen-Prozessrechner 12 laufende Betriebs-Modell eine Untermenge des im Modell- Prozessrechner laufenden Bandgießanlagen-Modells, das jedoch um die Signale der Sensoren 15a..15e ergänzt ist und die realen Abläufe daher besser widerspiegelt. Die "Erfahrungen" aus einem solchen Betriebs-Modell können aber wie bereits erwähnt in das Bandgießanlagen-Modell des Modell- Prozessrechner 13 einfließen und dieses verbessern.

Ergänzend wird auch angemerkt, dass die Bandgießanlage 1 insbesondere noch untergeordnete Regelkreise aufweisen kann. So kann zum Beispiel die Drehzahl n eines Gebläses 8a..8d anhand eines geforderten Luftstroms geregelt werden, oder auch die Vorlauftemperatur T eines Heizregisters 9a..9d anhand der Temperatur der in die Kammern 6a..6d einströmenden Luft. Als Betriebsparameter x kann also nicht nur eine Stellgröße für die zumindest eine Trocknungseinrichtung 8a..8d, 9a..9d / das Endlosband 4 / die Gießeinrichtung 5 vorgesehen sein, sondern auch eine Sollgröße. Im ersten Fall wird eine Einrichtung der Bandgießanlage 1 (das heißt zum Beispiel ein Gebläse 8a..8d, ein Heizregister 9a..9d, das Endlosband 4 oder die Gießeinrichtung 5) gesteuert, und als Betriebsparameter x ist demgemäß eine Stellgröße für die genannten Einrichtungen vorgesehen. Im zweiten Fall wird eine Sollgröße für den Betriebsparameter x vorgegeben, welcher von einer untergeordneten Regelung verarbeitet wird. Selbstverständlich muss eine untergeordnete Regelung nicht zwangsläufig örtlich abgesetzt vom Anlagen-Prozessregler 12 oder Modell-Prozessregler 13 angeordnet sein, sondern die Regelungen und Steuerungen können in beliebiger Gruppierung in einem oder mehreren elektronischen Schaltkreisen/Geräten abgebildet sein. Vorzugsweise kommunizieren die einzelnen Einrichtungen der Bandgießanlage 1 über ein Bussystem, aber auch dies ist keine zwingende Bedingung, und die Kommunikation kann auch über andere Art und Weise erfolgen.

In der Fig. 1 wird die über die Gebläse 8a..8d zugeführte Trocknungsluft im Sinne einer vereinfachten Darstellung einfach über die Auslässe 10a..10d in die Umgebung ausgeblasen. Selbstverständlich kann die Trocknungsluft vor dem Ausblasen gefiltert werden, zumal diese ja Lösungsmitteldämpfe enthält und/oder rückgeführt werden, um die Energieeffizienz der Bandgießanlage 1 zu steigern.

Zudem wird festgehalten, dass obwohl die Prozessoptimierung in den Figuren anhand des Herstellungsprozesses für einen Film 14 erläutert wurde, die offenbarte technische Lehre natürlich sinngemäß auch auf andere Produkte anwendbar ist, beispielsweise auf Folien oder Platten.

Die Ausführungsbeispiele zeigen mögliche Ausführungsvarianten einer erfindungsgemäßen Bandgießanlage 1, wobei an dieser Stelle bemerkt sei, dass die Erfindung nicht auf die speziell dargestellten Ausführungsvarianten desselben/derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst. Insbesondere wird auch festgehalten, dass die dargestellten Vorrichtungen in der Realität auch mehr oder weniger Bestandteile als dargestellt umfassen können und in den Figuren bisweilen stark vereinfacht dargestellt sind.

Der Ordnung halber sei abschließend darauf hingewiesen, dass die dargestellten Vorrichtungen sowie ihre Bestandteile zum besseren Verständnis ihres Aufbaus darüber hinaus teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

## Bezugszeichenaufstellung

| 1 | Bandgießanlage |
|---|---|
| 2, 3 | Bandrolle |
| 4 | Endlosband |
| 5 | Gießeinrichtung |
| 6a..6d | Kammer |
| 7 | Umlenkrolle |
| 8a..8d | Gebläse |
| 9a..9d | Heizregister |
| 10a..10d | Luftauslass |
| 11 | Haspel/Wickeleirichtung |
| 12 | Anlagen-Prozessrechner |
| 13 | Modell-Prozessrechner |
| 14 | Film/Folie |
| 15a..15e | Sensor |
| L | Lösungsmittelanteil |
| M | Auftragsmenge |
| n, n8a, n8b | Drehzahl Gebläse |
| Q | Qualität |
| s | Weg |
| t | Zeit |
| T, T9d | Vorlauftemperatur Heizregister |
| v | Bandgeschwindigkeit |
| x | Betriebsparameter allgemein |

**Patentansprüche**

1. Bandgießanlage (1), umfassend

   - ein über Bandrollen (2, 3) geführtes und angetriebenes Endlosband (4),
   - eine über dem Endlosband (4) angeordnete Gießeinrichtung (5),
   - zumindest eine Trocknungseinrichtung (8a..8d, 9a..9d) und
   - einen zumindest auf die wenigstens eine Trocknungseinrichtung (8a..8d, 9a..9d) wirkenden Anlagen-Prozessrechner (12),

   **gekennzeichnet durch**

   - einen auf ein Modell der Bandgießanlage (1) wirkenden Modell-Prozessrechner (13), welcher dazu eingerichtet ist, einen Wert und/oder Verlauf zumindest eines Betriebsparameters (x, n, T) der Trocknungseinrichtung (8a..8d, 9a..9d), welcher den auf der Bandgießanlage (1) ablaufenden Prozess beeinflusst, im Hinblick auf eine Änderung eines Betriebszustands der Bandgießanlage (1) im Bandgießanlagen-Modell parallel zu und unabhängig von dem auf der Bandgießanlage (1) aktuell ablaufenden Prozess zu berechnen und bei Anforderung der Betriebszustandsänderung in den Anlagen-Prozessrechner (12) zu laden.

2. Bandgießanlage (1) nach Anspruch 1, **dadurch gekennzeichnet, dass** als Betriebsparameter (x) eine Drehzahl (n) eines Gebläses (8a..8d) der Trocknungseinrichtung und/oder eine Temperatur (T) eines Heizers (9a..9d) der Trocknungseinrichtung und/oder ein von der genannten Drehzahl (n) beziehungsweise der genannten Temperatur (T) abhängiger Parameter vorgesehen ist.

3. Bandgießanlage (1) nach Anspruch 1 oder 2, **dadurch gekennzeichnet, dass** der Modell-Prozessrechner (13) dazu eingerichtet ist, einen Wert und/oder Verlauf zumindest eines Betriebsparameters (x, v, M) des Endlosbands (4) und/oder der Gießeinrichtung (5), welcher den auf der Bandgießanlage (1) ablaufenden Prozess beeinflusst, im Hinblick auf eine Änderung eines Betriebszustands der Bandgießanlage (1) im Bandgießanlagen-Modell parallel zu und unabhängig von dem auf der Bandgießanlage (1) aktuell ablaufenden Prozess zu berechnen und bei Anforderung der Betriebszustandsänderung in den Anlagen-Prozessrechner (12) zu laden.

4. Bandgießanlage (1) nach Anspruch 3, **dadurch gekennzeichnet, dass** als Betriebsparameter (x) eine Geschwindigkeit (v) des Bands (4) und/oder eine Zufuhrmenge (M) der Gießeinrichtung (5) und/oder ein von der genannten Geschwindigkeit (v) beziehungsweise der genannten Zufuhrmenge (M) abhängiger Parameter vorgesehen ist.

5. Bandgießanlage (1) nach einem der Ansprüche 1 bis 4, **dadurch gekennzeichnet, dass** als Betriebsparameter (x, n, T, v, M) eine Stellgröße für die zumindest eine Trocknungseinrichtung (8a..8d, 9a..9d) / das Endlosband (4) / die Gießeinrichtung (5) vorgesehen ist.

6. Bandgießanlage (1) nach einem der Ansprüche 1 bis 5, **dadurch gekennzeichnet, dass** wenigstens eine Regelung mit der zumindest einen Trocknungseinrichtung (8a..8d, 9a..9d) / dem Endlosband (4) / der Gießeinrichtung (5) verbunden ist und als Betriebsparameter (x, n, T, v, M) eine Sollgröße für die genannte Regelung vorgesehen ist.

7. Verfahren zur Herstellung eines Films (14) beziehungsweise einer Platte auf einer Bandgießanlage (1), umfassend die Schritte

   - Antreiben eines über Bandrollen (2, 3) geführten Endlosbands (4),
   - Auftragen eines Grundmaterials für die Platte/den Film (14) mit Hilfe einer Gießeinrichtung (5),
   - Ansteuern/Regeln zumindest einer auf das aufgetragene Grundmaterial wirkenden Trocknungseinrichtung (8a..8d, 9a..9d) mit Hilfe eines Anlagen-Prozessrechners (12), **dadurch gekennzeichnet, dass**
   - ein Wert und/oder Verlauf zumindest eines Betriebsparameters (x, n, T) der Trocknungseinrichtung (8a..8d, 9a..9d), welcher den auf der Bandgießanlage (1) ablaufenden Prozess beeinflusst, mit Hilfe eines auf ein Modell der Bandgießanlage (1) wirkenden Modell-Prozessrechners (13) im Hinblick auf eine Änderung eines Betriebszustands der Bandgießanlage (1) parallel zu und unabhängig von dem auf der Bandgießanlage (1) aktuell ablaufenden Prozess berechnet und bei Anforderung der Betriebszustandsänderung in die Anlagen-Prozessrechners (12) geladen wird.

8. Verfahren nach Anspruch 7, **dadurch gekennzeichnet, dass** der Anlagen-Prozessrechner (12) auf ein Betriebs-Modell wirkt, welches eine Untermenge des Bandgießanlagen-Modells darstellt, und die nicht im Betriebs-Modell enthaltenen Eingänge durch mit dem Anlagen-Prozessrechner (12) verbundene Sensoren (15a..15e) gebildet sind.

9. Verfahren nach Anspruch 7 oder 8, **dadurch gekennzeichnet, dass** der Wert und/oder der Verlauf des zumindest einen Betriebsparameters (x, v, n, T, M) im Hinblick auf minimalen Energieaufwand oder minimale Zeit (t) bis zur Erreichung eines stabilen Betriebszustands oder maximale Bandgeschwindigkeit (v) oder minimalen Materialeinsatz (M) berechnet wird.

10. Verfahren nach einem der Ansprüche 7 bis 9, **dadurch gekennzeichnet, dass** der Wert und/oder der Verlauf des zumindest einen Betriebsparameters (x, v, n, T, M) im Hinblick auf eine geforderte Qualität (Q) des hergestellten Films (14) / der hergestellten Platte berechnet wird.

11. Verfahren nach einem der Ansprüche 7 bis 10, **dadurch gekennzeichnet, dass** die Betriebszustandsänderung anhand der Formel für den Wärmeübergang

$$\dot{q} = \alpha \cdot A \cdot \Delta T$$

und die Formel für den Stofftransport

$$\dot{m} = \widetilde{M} \cdot \beta \cdot \tilde{\rho}_g \cdot \ln\left(\frac{1 - \tilde{y}_\infty}{1 - \tilde{y}_{Ph}}\right)$$

berechnet wird, wobei q den Wärmestrom, $\alpha$ den Wärmeübergangskoeffizienten, A die Fläche, welche für den Wärmestrom zur Verfügung steht, $\Delta T$ die Temperaturdifferenz $T_\infty$ - $T_{Oberfläche}$ zwischen einer von der Trocknungseinrichtung zugeführten Luft und der Oberfläche der der Platte/des Films (14), $\dot{m}$ den Massenstrom, $\widetilde{M}$ die Molmasse, $\beta$ den Stoffübergangskoeffizienten, $\tilde{\rho}_g$ die molare Dichte in der Gasphase, $\tilde{y}_\infty$ den Molenbruch in der Gaspahse und $\tilde{y}_{Ph}$ den Molenbruch an der Phasengrenze darstellt.

12. Computerprogrammprodukt mit einem darauf gespeicherten Computerprogramm, das ein Modell einer Bandgießanlage (1) nach einem der Ansprüche 1 bis 6 und einen auf das Bandgießanlagen-Modell wirkenden Modell-Prozessrechner (13) enthält und in einen Arbeitsspeicher eines Rechners ladbar ist und einen Wert und/oder einen Verlauf zumindest eines Betriebsparameters (x, n, T) einer im Bandgießanlagen-Modell enthaltenen Trocknungseinrichtung (8a..8d, 9a..9d), welcher den durch das Bandgießanlagen-Modell modellierten Prozess beeinflusst, im Hinblick auf Änderung eines Betriebszustands des Bandgießanlagen-Modells zu berechnen und das Verfahren nach einem der Ansprüche 7 bis 11 ausführt, wenn das Computerprogramm im Rechner ausgeführt wird.

13. Rechner mit einem darauf gespeicherten Computerprogramm, das ein Modell einer Bandgießanlage (1) nach einem der Ansprüche 1 bis 6 und einen auf das Bandgießanlagen-Modell wirkenden Modell-Prozessrechner (13) enthält und in einen Arbeitsspeicher des Rechners ladbar ist und einen Wert und/oder einen Verlauf zumindest eines Betriebsparameters (x, n, T) einer im Bandgießanlagen-Modell enthaltenen Trocknungseinrichtung (8a..8d, 9a..9d), welcher den durch das Bandgießanlagen-Modell modellierten Prozess beeinflusst, im Hinblick auf Änderung eines Betriebszustands des Bandgießanlagen-Modells zu berechnen und das Verfahren nach einem der Ansprüche 7 bis 11 ausführt, wenn das Computerprogramm im Rechner ausgeführt wird.

**Claims**

1. A strip casting system (1) comprising

    - a continuous strip (4) guided and driven over strip rollers (2, 3),
    - a casting device (5) arranged over the continuous strip (4),
    - at least one drying device (8a..8d, 9a..9d) and
    - a system process computer (12) acting at least on the at least one drying device (8a..8d, 9a..9d),

    **characterized by**

    - a model process computer (13) acting on a model of the strip casting system (1) which is set up to calculate a value and/or profile of at least one operating parameter (x, n, T) of the drying device (8a..8d, 9a..9d) which influences the process taking place on the strip casting system (1) in respect of a change of an operating state of the strip casting system (1) in the strip casting systems model parallel to, and independently of, the process currently taking place on the strip casting system (1) and, if required by the change in operating state, to load it into the systems process computer (12).

2. The strip casting system (1) according to claim 1, **characterized in that** a rotational speed (n) of a fan (8a..8d) of the drying device and/or a temperature (T) of a heater (9a..9d) of the drying device and/or a parameter dependent on the aforementioned rotational speed (n) or else the aforementioned temperature (T) is provided as the operating parameter (x).

3. The strip casting system (1) according to claim 1 or 2, **characterized in that** the model process computer (13) is set up to calculate a value and/or a profile of at least one operating parameter (x, v, M) of the continuous strip (4) and/or of the casting device (5) which influences the process taking place on the strip casting system (1) in relation to a change in an operating state of the strip casting system (1) in the strip casting systems model parallel to and independently of the process currently taking place on the strip casting system (1) and, if required by the change in operating state, to load it into the systems process computer (12).

4. The strip casting system (1) according to claim 3, **characterized in that** a speed (v) of the strip (4) and/or a supply quantity (M) of the casting device (5) and/or a parameter dependent on the aforementioned speed (v) or else the aforementioned supply quantity (M) is provided as the operating parameter (x).

5. The strip casting system (1) according to one of claims 1 to 4, **characterized in that** as the operating parameter (x, n, T, v, M) an actuating variable for the at least one drying device (8a..8d, 9a..9d) / the continuous strip (4) / the casting device (5) is provided.

6. The strip casting system (1) according to one of claims 1 to 5, **characterized in that** at least one controller is connected to the at least one drying device (8a..8d, 9a..9d) / the continuous strip (4) / the casting device (5) and a target variable for the aforementioned control system is provided as the operating parameter (x, n, T, v, M).

7. A method for producing a film (14) or else a plate on a strip casting system (1) comprising the steps

- driving of a continuous strip (4) guided over strip rollers (2, 3),
- application of a base material for the plate/film (14) with the help of a casting device (5),
- actuation/control of at least one drying device (8a..8d, 9a..9d) acting on the applied base material with the help of a systems process computer (12),

**characterized in that**

- a value and/or profile of at least one operating parameter (x, n, T) of the drying device (8a..8d, 9a..9d) which influences the process taking place on the strip casting system (1) with the help of a model process computer (13) acting on a model of the strip casting system (1) in respect of a change in an operating state of the strip casting system (1) parallel to, and independently of, the process currently taking place on the strip casting system (1) is calculated and, if required by the change in operating state, loaded into the systems process computer (12).

8. The method according to claim 7, **characterized in that** the systems process computer (12) acts on an operating model which represents a subset of the strip casting systems model and the inputs not contained in the operating model are created by sensors (15a..15e) connected to the systems process computer (12).

9. The method according to claim 7 or 8, **characterized in that** the value and/or profile of the at least one operating parameter (x, v, n, T, M) is calculated in respect of the minimal energy expenditure or minimal time (t) until a stable operating state is achieved or maximum strip speed (v) or minimal material input (M).

10. The method according to one of claims 7 to 9, **characterized in that** the value and/or profile of the at least one operating parameter (x, v, n, T, M) is calculated in relation to a required quality (Q) of the film (14) produced / the plate produced.

11. The method according to one of claims 7 to 10, **characterized in that** the change in operating state is calculated with the help of the formula for heat transmission

$$\dot{q} = \alpha \cdot A \cdot \Delta T$$

and the formula for substance transportation

$$\dot{m} = \tilde{M} \cdot \beta \cdot \tilde{\rho}_g \cdot \ln\left(\frac{1 - \tilde{y}_\infty}{1 - \tilde{y}_{Ph}}\right)$$

wherein $\dot{q}$ represents the heat flow, $\alpha$ the thermal transmission coefficient, A the area available for the heat flow, $\Delta T$ the temperature difference $T_\infty$ - $T_{surface}$ between air supplied by the drying device and the surface of the plate/film (14), $\dot{m}$ the mass flow, $\tilde{M}$ the molar mass, $\beta$ the substance transmission coefficient, $\tilde{\rho}_g$ the molar density in the gas phase, $\tilde{y}_\infty$ the molar fraction in the gas phase and $\tilde{y}_{Ph}$ the molar fraction at the phase interface.

12. A computer program product with a computer program stored thereon which contains a model of a strip casting system (1) according to one of claims 1 to 6 and a model process computer (13) acting on the strip casting systems model and which can be loaded into a working memory of a computer and calculates a value and/or a profile of at least one operating parameter (x, n, T) of a drying device (8a..8d, 9a..9d) contained in the strip casting systems model which influences the process modelled by the strip casting systems model in respect of a change in an operating state of the strip casting systems model and carries out the method according to one of claims 7 to 11 when the computer program is run on the computer.

13. A computer with a computer program stored thereon which contains a model of a strip casting system (1) according to one of claims 1 to 6 and contains a model process computer (13) acting on the strip casting systems model and can be loaded into a working memory of the computer and calculates a value and/or a profile of at least one operating parameter (x, n, T) of a drying device (8a..8d, 9a..9d) contained in the strip casting systems model which influences the process modelled by the strip casting systems model in respect of a change in an operating state of the strip casting systems model and carries out the method according to one of claims 7 to 11 when the computer program is run on the computer.

**Revendications**

1. Installation de coulée en bande (1), comprenant

 - une bande sans fin (4) entraînée et guidée par le biais de rouleaux de bandes (2, 3),
 - un dispositif de coulée (5) disposé sur la bande sans fin (4),
 - au moins un dispositif de séchage (8a..8d, 9a..9d) et
 - un calculateur de processus d'installation (12) agissant au moins sur le dispositif de séchage (8a..8d, 9a..9d)au moins au nombre de un,

 **caractérisée par**

 - un calculateur de processus de modèle (13) qui agit sur un modèle de l'installation de coulée en bande (1) et qui est agencé pour calculer une valeur et/ou une courbe d'au moins un paramètre de fonctionnement (x, n, T) du dispositif de séchage (8a..8d, 9a..9d) qui influence le processus se déroulant sur l'installation de coulée en bande (1) en ce qui concerne une variation d'un état de fonctionnement de l'installation de coulée en bande (1) dans le modèle d'installation de coulée en bande parallèlement au et indépendamment du processus se déroulant actuellement sur l'installation de coulée en bande (1) et pour charger cette valeur et/ou cette courbe dans le calculateur de processus d'installation (12) en cas de demande de variation d'état de fonctionnement.

2. Installation de coulée en bande (1) selon la revendication 1, **caractérisée en ce qu'**une vitesse de rotation (n) d'un ventilateur (8a..8d) du dispositif de séchage et/ou une température (T) d'un appareil de chauffage (9a..9d) du dispositif de séchage et/ou un paramètre dépendant de ladite vitesse de rotation (n)ou respectivement de ladite température (T) est prévu(e) en tant que paramètre de fonctionnement (x).

3. Installation de coulée en bande (1) selon la revendication 1 ou 2, **caractérisée en ce que** le calculateur de processus de modèle (13) est agencé pour calculer une valeur et/ou une courbe d'au moins un paramètre de fonctionnement (x, v, M) de la bande sans fin (4) et/ou du dispositif de coulée (5) qui influence le processus se déroulant sur l'installation de coulée en bande (1) en ce qui concerne une variation d'un état de fonctionnement de l'installation de coulée en bande (1) dans le modèle d'installation de coulée en bande parallèlement au et indépendamment du processus se déroulant actuellement sur l'installation de coulée en bande (1) et pour charger cette valeur et/ou cette courbe dans le calculateur de processus d'installation (12) en cas de demande de variation d'état de fonctionnement.

4. Installation de coulée en bande (1) selon la revendication 3, **caractérisée en ce qu'**une vitesse (v) de la bande (4) et/ou une quantité d'acheminement (M) du dispositif de coulée (5) et/ou un paramètre dépendant de ladite vitesse (v) ou respectivement de ladite quantité d'acheminement (M) est prévu€ en tant que paramètre de fonctionnement (x).

5. Installation de coulée en bande (1) selon l'une des revendications 1 à 4, **caractérisée en ce qu'**une grandeur de réglage pour le dispositif de séchage (8a..8d, 9a..9d) au moins au nombre de un / la bande sans fin (4) / le dispositif de coulée (5) est prévue en tant que paramètre de fonctionnement (x, n, T, v, M).

6. Installation de coulée en bande (1) selon l'une des revendications 1 à 5, **caractérisée en ce qu'**au moins une régulation est raccordée au dispositif de séchage (8a..8d, 9a..9d) au moins au nombre de un / à la bande sans fin (4) / au dispositif de coulée (5) et **en ce qu'**une grandeur de réglage pour ladite régulation est prévue en tant que paramètre de fonctionnement (x, n, T, v, M).

7. Procédé de fabrication d'un film (14) ou respectivement d'une plaque sur une installation de coulée en bande (1), comprenant les étapes suivantes :

 - entraînement d'une bande sans fin (4) guidée par le biais de rouleaux de bandes (2, 3),
 - application d'un matériau de fond pour la plaque / le film (14) à l'aide d'un dispositif de coulée (5),
 - commande/régulation d'au moins un dispositif de séchage (8a..8d, 9a..9d) agissant sur le matériau de fond appliqué à l'aide d'un calculateur de processus d'installation (12), **caractérisé en**

**ce que**

- une valeur et/ou courbe d'au moins un paramètre de fonctionnement (x, n, T) du dispositif de séchage (8a..8d, 9a..9d) qui influence le processus se déroulant sur l'installation de coulée en bande (1) est calculée, à l'aide d'un calculateur de processus de modèle (13) agissant sur un modèle de l'installation de coulée en bande (1) en ce qui concerne une variation d'un état de fonctionnement de l'installation de coulée en bande (1) parallèlement au et indépendamment du processus se déroulant actuellement sur l'installation de coulée en bande (1) et, en cas de demande de variation de l'état de fonctionnement, est chargée dans le calculateur de processus d'installation (12).

8. Procédé selon la revendication 7, **caractérisé en ce que** le calculateur de processus d'installation (12) agit sur un modèle de fonctionnement qui représente un sous-ensemble du modèle d'installation de coulée de bande, et les entrées non contenues dans le modèle de fonctionnement sont formées par des capteurs (15a..15e) raccordés au calculateur de processus d'installation (12).

9. Procédé selon la revendication 7 ou 8, **caractérisé en ce que** la valeur et/ou la courbe du paramètre de fonctionnement (x, v, n, T, M) au moins au nombre de un en ce qui concerne une dépense d'énergie minimale ou un temps (t) minimal jusqu'à l'obtention d'un état de fonctionnement stable ou une vitesse de bande (v) maximale ou une utilisation de matériau (M) minimale est calculée.

10. Procédé selon l'une des revendications 7 à 9, **caractérisé en ce que** la valeur et/ou la courbe du paramètre de fonctionnement (x, v, n, T, M) au moins au nombre de un en ce qui concerne la qualité (Q) exigée du film (14) fabriqué / de la plaque fabriquée est calculée.

11. Procédé selon l'une des revendications 7 à 10, **caractérisé en ce que** la variation de l'état de fonctionnement est calculée à l'aide de la formule pour le transfert thermique

$$\dot{q} = \alpha \cdot A \cdot \Delta T$$

et de la formule pour le transport de matière

$$\dot{m} = \tilde{M} \cdot \beta \cdot \tilde{\rho}_g \cdot \ln\left(\frac{1 - \tilde{y}_\infty}{1 - \tilde{y}_{Ph}}\right)$$

$\dot{q}$ représentant le flux thermique, $\alpha$ le coefficient de transfert thermique, A la surface qui est disponible pour le flux thermique, $\Delta T$ la différence de température $T_\infty - T_{surface}$ entre un air acheminé par le dispositif de séchage et la surface de la plaque/du film (14), m le flux massique, $\tilde{M}$ la masse molaire, $\beta$ le coefficient de transfert de matière, $\tilde{\rho}_g$ la densité molaire dans la phase gazeuse, $\tilde{y}_\infty$ la fraction molaire dans la phase gazeuse et $\tilde{y}_{Ph}$ la fraction molaire à la limite de phase.

12. Produit de programme informatique sur lequel est stocké un programme informatique qui contient un modèle d'une installation de coulée en bande (1) selon l'une des revendications 1 à 6 et un calculateur de processus de modèle (13) agissant sur le modèle d'installation de coulée en bande et qui peut être chargé dans une mémoire de travail d'un calculateur et qui calcule une valeur et/ou une courbe d'au moins un paramètre de fonctionnement (x, n, T) d'un dispositif de séchage (8a..8d, 9a..9d) contenu dans le modèle d'installation de coulée en bande qui influence le processus modélisé par le modèle d'installation de coulée en bande en ce qui concerne une variation d'un état de fonctionnement du modèle d'installation de coulée en bande et réalise le procédé selon l'une des revendications 7 à 11 quand le programme informatique est exécuté dans le calculateur.

13. Calculateur sur lequel est stocké un programme informatique qui contient un modèle d'une installation de coulée en bande (1) selon l'une des revendications 1 à 6 et un calculateur de processus de modèle (13) agissant sur le modèle d'installation de coulée en bande et qui peut être chargé dans une mémoire de travail du calculateur et qui calcule une valeur et/ou une courbe d'au moins un paramètre de fonctionnement (x, n, T) d'un dispositif de séchage (8a..8d, 9a..9d) contenu dans le modèle d'installation de coulée en bande qui influence le processus modélisé par le modèle d'installation de coulée en bande en ce qui concerne une variation d'un état de fonctionnement du modèle d'installation de coulée en bande et réalise le procédé selon l'une des revendications 7 à 11 quand le programme informatique est exécuté dans le calculateur.

**Fig. 1**

**Fig. 2**

**Fig. 3**

**Fig. 4**

**Fig. 5**

Fig. 6

Fig. 7

EP 3 209 474 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3901378 A1